# EUROPÄISCHE PATENTSCHRIFT

(11) **EP 0 529 249 B1**
(45) Veröffentlichungstag und Bekanntmachung des Hinweises auf die Patenterteilung: **16.08.1995**
(21) Anmeldenummer: 92111548.1
(22) Anmeldetag: 08.07.1992
(51) Int. Cl.: B62D 25/20

(54) **Hohlträger für eine Kraftfahrzeugkarosserie an der Befestigungsstelle eines Aggregats**
Hollow beam for a vehicle body at a fixation point of an aggregate
Poutre creuse pour une carrosserie de véhicule prévue à l'endroit de fixation d'un aggrégat

(30) Priorität: 22.08.1991 DE 4127729
(43) Veröffentlichungstag der Anmeldung: 03.03.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Haesters, Achim, W-5024 Pulheim (DE)
(74) Vertreter: Messulam, Alec Moses

(56) Entgegenhaltungen:
- DE-A- 2 435 545
- DE-C- 2 049 214
- DE-C- 2 227 560
- DE-C- 2 412 506

## Beschreibung

Die Erfindung bezieht sich auf einen Hohlträger für eine Kraftfahrzeugkarosserie an der Befestigungsstelle eines Aggregates, der im Oberbegriff des Patentanspruches 1 erläuterten Art.

Aus der DE-PS 20 49 214 ist ein Hohlträger für eine Kraftfahrzeugkarosserie an der Befestigungsstelle eines Aggregates bekannt, der im wesentlichen dem Oberbegriff des Patentanspruches 1 entspricht.

Die hier vorgesehenen, sich quer zum Hohlträger erstreckende Befestigungsschrauben umfassenden Distanz- oder Stützkörper sind hierbei als eingeschweißte Distanzrohre ausgebildet, die von vornherein im Hohlträger angeordnet werden müssen.

Aus der DE-PS 22 27 560 ist ein Hohlträger für eine Kraftfahrzeugkarosserie bekannt, der gleichfalls im wesentlichen dem Oberbegriff des Patentanspruches 1 entspricht, wobei hier jedoch die, die sich quer zum Hohlträger erstreckenden Befestigungsschrauben umfassenden Distanz- oder Stützkörper als entsprechend ausgeformte Versteifungsbleche ausgebildet sind, die gleichfalls von vornherein innerhalb des Hohlträgers angeordnet werden müssen.

Bei Hohlträgern von Kraftfahrzeugkarosserien müssen jedoch oft Befestigungsstellen für Aggregate vorgesehen werden, die nur fallweise montiert werden, da sie nur in Abhängigkeit vom Ausstattungsumfang des Kraftfahrzeuges tatsächlich montiert werden. Solche Aggregate können in erster Linie zu Sonderausstattungen, wie z.B. Servolenkung, Klimaanlage oder Anhängerkupplungen gehörende Bauteile, umfassen.

Aus der DE-PS 24 12 506 wird die Anregung entnommen, daß an einem Hohlträger für eine Kraftfahrzeugkarosserie mit Befestigungsstellen für ein Aggregat entsprechende Befestigungsteile erst bei Bedarf über eine benachbart der tatsächlichen Befestigungsstelle angeordnete Montageöffnung in das Innere des Trägers einführbar und in der vorgesehenen Lage fixierbar sind.

Bei der bekannten Ausführungsform handelt es sich um Gewindeplatten, die für ein am Boden des Hohlträgers anzuordnendes Aggregat und sich dementsprechend senkrecht erstreckende Befestigungsschrauben vorgesehen sind.

Die Aufgabe der Erfindung ist es, einen Hohlträger für eine Kraftfahrzeugkarosserie, der im Oberbegriff des Patentanspruches 1 erläuterten Art derart zu verbessern, daß ein nachträgliches Anbringen der für ein bestimmtes Aggregat erforderlichen Verstärkungsteile, wie Distanz- oder Stützkörper, innerhalb des Hohlträgers ermöglicht wird, wobei auf eine optimale Übertragung der aufzunehmenden Kräfte geachtet wird.

Gemäß der Erfindung wird die Aufgabe gelöst, indem an einem Hohlträger für eine Kraftfahrzeugkarosserie, der im Oberbegriff des Patentanspruches erläuterten Art, die im Kennzeichenteil des Patentanspruches aufgezeigten Merkmale angewendet werden.

Dadurch, daß benachbart den Befestigungsbohrungen am Träger eine Montageöffnung vorgesehen ist, durch die das Distanz- oder Stützelement nachträglich in das Innere des Trägers einführbar ist und im Träger Mittel vorgesehen sind, über die das Distanz- oder Stützelement in seiner die Befestigungsschrauben zumindest teilweise umfassenden Lage bringbar und fixierbar ist, kann erst bei gegebenem Bedarf, nämlich wenn ein bestimmtes Aggregat in einem Fahrzeug montiert werden muß, die entsprechende Verstärkung eingesetzt und angeordnet werden.

Dadurch, daß von der Montageöffnung ausgehend, in den Seitenwänden des Trägers Einprägungen, Sicken oder dergleichen angeordnet sind, die auf der Innenseite des Hohlträgers seitliche, geneigte Rampen bilden, über die eine Distanzhülse rollend in ihrer vorbestimmten Lage konzentrisch zu den Befestigungsbohrungen überführbar und fixierbar ist, wird bei minimalen Abmessungen der Montageöffnung eine optimale Übertragung der aufzunehmenden Kräfte unmittelbar in die Seitenwände des Hohlträgers ermöglicht.

Die Erfindung wird anhand eines in den Zeichnungen gezeigten Ausführungsbeispieles näher erläutert. Es zeigt:

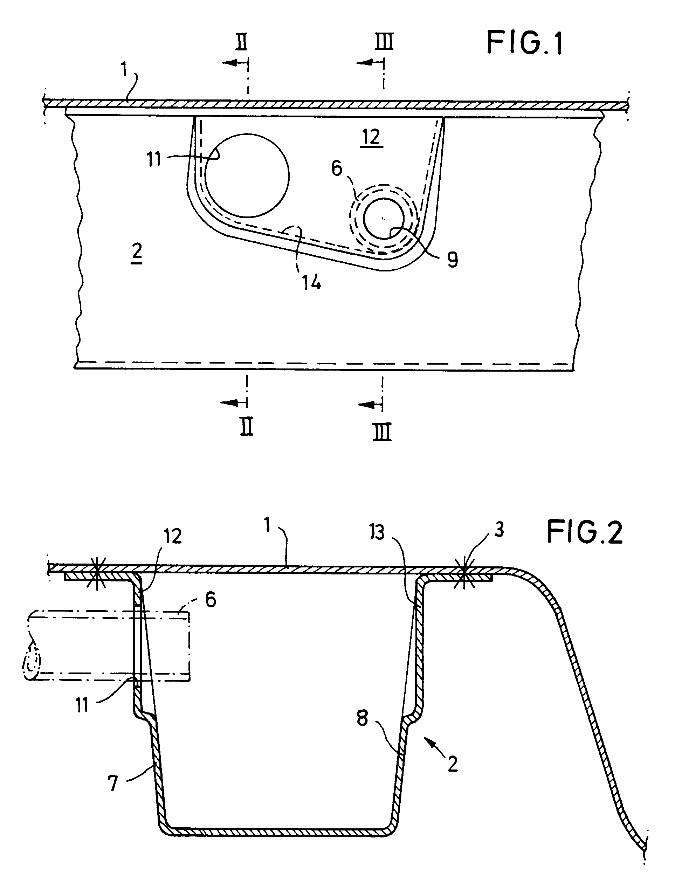

- Fig. 1: eine Seitenansicht eines Hohlträgers einer Kraftfahrzeugkarosserie an der Befestigungsstelle eines Aggregates;
- Fig. 2: einen vertikalen Schnitt entlang der Linie II-II in Fig. 1;

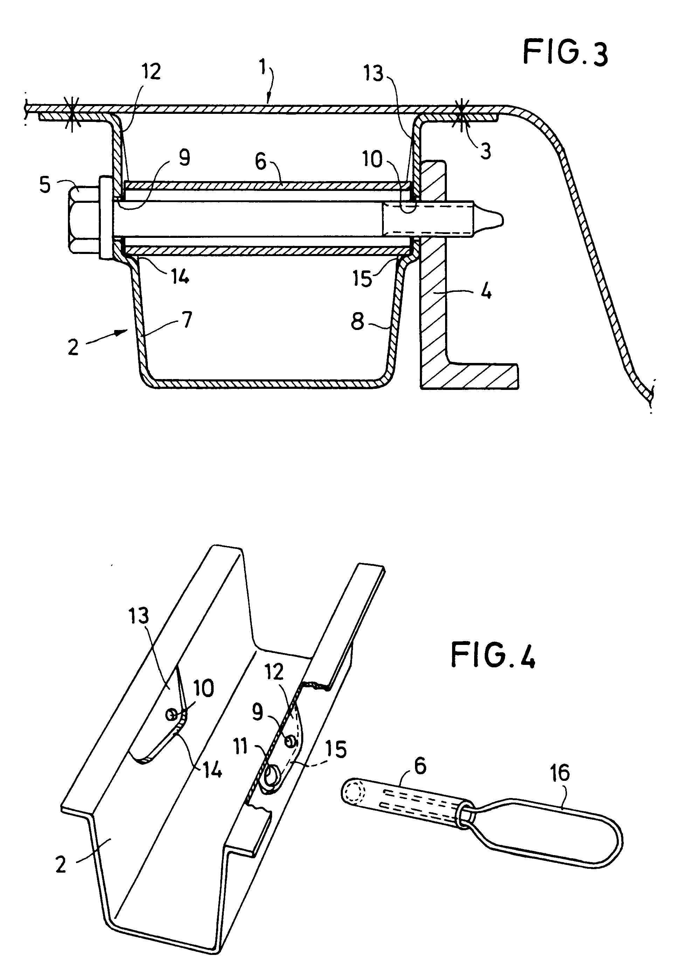

- Fig. 3: einen vertikalen Schnitt entlang der Linie III-III in Fig. 1 und
- Fig. 4: eine perspektivische Darstellung des Montagevorganges mit Hilfe einer einfachen Montagevorrichtung.

In den Figuren ist ein Hohlträger für eine Kraftfahrzeugkarosserie gezeigt, wie er z.B. im hinteren Bereich des Kraftfahrzeuges seitlich der Mulde für das Reserverad verlaufend angeordnet ist.

Unterhalb eines Bodenbleches 1 ist ein hutförmiger Hohlträger 2 durch entsprechende Punktschweißungen 3 entlang seines Flansches mit dem Bodenblech 1 fest verbunden. Das Innere des Hohlträgers 2 ist dementsprechend nicht ohne weiteres mehr zugänglich.

Bestimmte Aggregate, wie z.B. die Verstrebung 4 einer Anhängerkupplung, werden erst nach fertiglackierter Karosserie im Werk oder sogar erst außerhalb des Werkes montiert.

Um eine optimale Einleitung der aufzunehmenden Kräfte in den Hohlträger 2 sicherzustellen, muß eine sich quer zum Hohlträger erstreckende Befestigungsschraube 5 über einen sie zumindest teilweise umfassenden Distanz- oder Stützkörper 6, im vorliegenden Ausführungsbeispiel als Distanzhülse 6 ausgebildet, gegenüber den Seitenwänden 7 und 8 des Hohlträgers 2 verspannt werden. Hierzu ist es jedoch erforderlich, daß die Befestigungsbohrungen 9 und 10 zur Aufnahme der Befestigungsschraube 5 kleiner sind als der Durchmesser der Distanzhülse 6.

Um nun die Distanzhülse 6 erst nachträglich in das Innere des Hohlträgers 2 einführen zu können, muß eine größere Montageöffnung 11 zumindest in einer Seitenwand 7 des Hohlträgers 2 vorgesehen werden. Im Bereich der Montageöffnung 11 ist eine Anordnung der Distanzhülse 6 mit einwandfreier Übertragung der aufzunehmenden Kräfte auf die Seitenwände 7 und 8 nicht möglich.

Gemäß der Erfindung wird daher vorgeschlagen, daß im Hohlträger 2 Mittel vorgesehen sind, die den Distanz- oder Stützkörper in die vorgesehene, die Befestigungsschraube 5 zumindest teilweise umfassende Lage bringen und fixieren.

Im vorliegenden Ausführungsbeispiel sind diese Mittel als in den Seitenwänden 7 und 8 des Trägers 2 ausgebildete Einprägungen 12 und 13 ausgeführt, deren untere Kanten 14 und 15 seitliche, geneigte Rampen bilden, über die die Distanzhülse 6 rollend in ihre vorbestimmte Lage konzentrisch zu den Befestigungsbohrungen 9 und 10 bring- und fixierbar ist.

Zum Einführen der Distanzhülse 6 in das Innere des Hohlträgers 2 wird hierbei vorzugsweise eine einfache Montagevorrichtung 16 in Form eines einfachen Drahtbügels verwendet, mit der sichergestellt werden kann, daß beim Einbringen der Distanzhülse 6 diese sicher auf beiden seitlichen, geneigten Rampen 14 und 15 zum Aufliegen kommt, so daß sie in ihre vorgesehene Lage rollen kann.

Selbstverständlich kann anstelle der in der vorliegenden Ausführungsform aufgezeigten Einprägungen 12 und 13 auch lediglich entsprechend geneigte Sicken für das Positionieren der Distanzhülse vorgesehen werden.

## Patentansprüche

1. Hohlträger für eine Kraftfahrzeugkarosserie an der Befestigungsstelle eines Aggregates, mit sich durch Befestigungsbohrungen (9 und 10) quer zum Hohlträger (2) erstreckenden Befestigungsschrauben (5), die über einen sich zwischen den Seitenwänden (7 und 8) des Hohlträgers (2) erstreckenden Distanz- oder Stützkörper (6), der die Befestigungsschrauben (5) zumindest teilweise umfaßt, verspannbar sind, dadurch gekennzeichnet, daß
- benachbart den Befestigungsbohrungen (9 und 10) am Hohlträger (2) zumindest eine Montageöffnung (11) in zumindest einer Seitenwand (7) vorgesehen ist, durch die der Distanz- oder Stützkörper (6) nachträglich in das Innere des Hohlträgers (2) einführbar ist,
- im Hohlträger (2) Mittel (14 und 15) vorgesehen sind, über die der Distanz- oder Stützkörper (6) in seine vorbestimmte, die Befestigungsschrauben (5) zumindest zum Teil umfassende Lage bring- und fixierbar ist, und
- von der Montageöffnung (11) ausgehend in den Seitenwänden (7 und 8) des Hohlträgers (2) nach innen vorspringende Einprägungen (12 und 13) oder Sicken angeordnet sind, die auf der Innenseite des Hohlträgers (2) seitliche, geneigte Rampen (14 und 15) bilden, über die eine Distanzhülse (6) rollend in ihre vorbestimmte Lage, konzentrisch zu den Befestigungsbohrungen (9 und 10) für die Befestigungsschraube (5) überführbar ist.

## Claims

1. A hollow rail for a motor vehicle body at a unit mounting position, comprising mounting bolts (5), extending transversely of the hollow rail (2) through mounting bores (9 and 10), which can be braced over a spacer or supporting member (6) which extends between the side walls (7 and 8) of the rail (2) and at least partly surrounds the mounting bolts (5), characterised in that
- adjacent the mounting bores (9 and 10) on the hollow rail (2) at least one assembly opening (11) is provided in at least one side wall (7) through which the spacer or supporting member (6) can later be introduced into the interior of the rail (2);
- means (14 and 15) are provided in the hollow rail (2) by which the spacer or supporting member (6) can be brought into and held in its predetermined position at least partly surrounding the mounting bolts (5); and
- in the side walls (7 and 8) of the rail inwardly-projecting indentations (12 and 13) or flanges are provided which proceed from the assembly opening (11) and form on the inside of the hollow spacer (2) lateral inclined ramps (14 and 15) along which a spacer sleeve (6) can be brought into its predetermined position, concentric with the mounting bores (9 and 10) for the mounting bolt (5), by rolling.

## Revendications

1. Longeron creux pour une carrosserie de véhicule à moteur à un point de fixation d'un agrégat, comportant des vis de fixation (5) s'étendant à travers des perçages de fixation (9 et 10) transversalement par rapport au longeron creux (2), qui sont assujetties par l'intermédiaire d'un corps d'écartement ou d'appui (6) s'étendant entre les parois latérales (7 et 8) du longeron creux (2) et entourant au moins partiellement les vis de fixation (5), caractérisé en ce qu'à proximité des perçages de fixation (9 et 10), sur le longeron creux (2), au moins une ouverture de montage (11) est prévue dans au moins une paroi latérale (7), ouverture à travers laquelle le corps d'écartement ou d'appui (6) peut être introduit ultérieurement à l'intérieur du longeron creux (2), en ce que, dans le longeron creux (2), sont prévus des moyens (14 et 15) par l'intermédiaire desquels le corps d'écartement ou d'appui (6) peut être mis ou immobilisé dans sa position préalablement définie dans laquelle il entoure au moins partiellement les vis de fixation (5), et en ce qu'à partir de l'ouverture de montage (11), sont disposées dans les parois latérales (7 et 8) du longeron creux (2) des empreintes (12 et 13) ou des moulures faisant saillie vers l'intérieur, qui forment sur la face intérieure du longeron creux (2) des rampes latérales inclinées (14 et 15) permettant de faire passer une douille d'écartement (6) dans sa position préalablement définie en la faisant rouler de façon concentrique par rapport aux perçages de fixation (9 et 10) pour la vis de fixation (5).
